# EUROPEAN PATENT APPLICATION

(11) **EP 1 426 432 A1**
(43) Date of publication of application: **09.06.2004**
(21) Application number: 02767948.9
(22) Date of filing: 11.09.2002
(51) Int. Cl.: C10G 45/10, C10G 45/26, C10G 29/16, C01B 3/38

(54) **METHOD FOR DESULFURIZATION AND REFORMING OF HYDROCARBON STOCK**

(30) Priority: 12.09.2001 JP 2001276656
(71) Applicant: COSMO OIL CO., LTD, Minato-ku, Tokyo 105-8528 (JP)
(72) Inventor: CHIYODA, Osamu, Cosmo Oil Co., Ltd., Satte-shi, Saitama 340-0193 (JP); IWANAMI, Hikoichi, Cosmo Oil Co., Ltd., Satte-shi, Saitama 340-0193 (JP)
(74) Representative: HOFFMANN - EITLE
(86) International application number: PCT/JP2002/009281
(87) International publication number: WO 2003/025096

(57) **Abstract**

A method for desulfurization of hydrocarbon comprising reducing the sulfur content of hydrocarbons containing sulfur compounds, which comprises mixing the hydrocarbons containing sulfur compounds with water vapor, and contacting the resultant mixture with a catalyst comprising an inorganic oxide support and either platinum or palladium fixed to the support, and with a desulfurizing material at a temperature of 300°C or higher.

## Description

### Technical Field

The present invention relates to a method of hydrocarbon desulfurization/reforming in which hydrocarbons are desulfurized and steam-reformed. More particularly, the invention relates to a method of hydrocarbon desulfurization and reforming which is suitable for the production of hydrogen for use in fuel cells, etc.

### Background Art

For the so-called steam reforming reaction of hydrocarbons in which hydrogen is yielded from a hydrocarbon feedstock and water vapor, use is generally made of a catalyst employing nickel or ruthenium as an active metal. Since nickel and ruthenium serving as active metals have poor resistance to sulfur, hydrocarbon feedstocks containing sulfur compounds are generally subjected to a desulfurization treatment before being used in steam reforming reactions. For this desulfurization treatment to be performed beforehand, the adsorptive desulfurization method using an adsorbent is extensively used when the feedstock hydrocarbons are gaseous hydrocarbons. However, in the case where the hydrocarbon feedstock is a liquid fuel such as naphtha, gasoline, kerosene, or gas oil, the adsorptive desulfurization with an adsorbent is insufficient because such liquid fuels differ from gaseous hydrocarbons in the properties of the sulfur compounds. For example, the sulfur content required of JIS No. 1 kerosene should be 80 ppm by weight or lower, and kerosene products generally on the market are thought to have a sulfur content of from 40 to 80 ppm by weight. In the case where kerosene, which is a general domestic fuel, is used as a hydrocarbon feedstock, the desulfurization treatment thereof necessitates a desulfurization technique besides the adsorptive desulfurization method using an adsorbent. Because of this, the so-called hydrodesulfurization method is generally employed in which sulfur compounds are converted to hydrogen sulfide with a cobalt-molybdenum or nickel-molybdenum catalyst in a high-temperature (200 to 400°C) high-pressure (20 to 150 kg/cm²) hydrogen atmosphere and the hydrogen sulfide is removed with an adsorbent. Methods of hydrocarbon (kerosene) desulfurization using hydrogen have hence been investigated enthusiastically from long ago as described in JP-A-6-91173, JP-A-8-183961, etc.

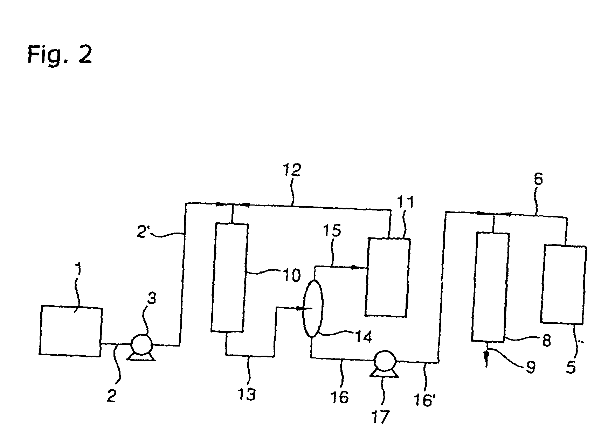

Fig. 2 diagrammatically shows a process flow of one example of the method heretofore in use for the steam reforming of hydrocarbons, which includes the hydrodesulfurizationmethod described above used as the desulfurization treatment of a hydrocarbon feedstock beforehand.

In the method of steam reforming of hydrocarbons shown in Fig. 2, kerosene is fed as a hydrocarbon feedstock from a kerosene tank 1 to a hydrodesulfurizer 10 through a line 2, pump 3, and line 2'. Hydrogen is further supplied to the hydrodesulfurizer 10 from a hydrogen tank 11 through a line 12. In the hydrodesulfurizer 10, the kerosene and the hydrogen are mixed with each other and the sulfur compounds contained in the kerosene are converted to hydrogen sulfide at a high temperature and a high pressure. The sulfur converted to hydrogen sulfide is adsorbed onto and trapped with a desulfurizing material. Thus, the kerosene is desulfurized. The treated kerosene is withdrawn from the hydrodesulfurizer 10 through a line 13, introduced into a gas/liquid separator 14, and separated at a low temperature into unreacted hydrogen and liquid kerosene. The unreacted hydrogen is returned to the hydrogen tank 11 through a line 15. The liquid kerosene is fed to a steam reformer 8 through a line 16, pump 17, and line 16', and water vapor is further supplied to the steam reformer 8 from a steam generator 5 through a line 6. In the stream reformer 8, the kerosene is mixed with the water vapor and undergoes steam reforming at a high temperature and a high pressure to yield hydrogen. The treated kerosene which contains the hydrogen yielded is withdrawn from the steam reformer 8 through a line 9, and the hydrogen is separated as a target reaction product (not shown) from the treated kerosene.

However, the existing steam reforming of hydrocarbons described above, which includes a hydrodesulfurization method, is intended to be employed generally in places equipped with hydrogen lines, such as chemical plants andpetroleumrefineries. Namely, for use in places not equipped with hydrogen lines, such as, e.g., homes, hospitals, or apartment houses, the steam reforming method necessitates a hydrogen source such as a hydrogen bomb and hence has a problem concerning cost.

Furthermore, the existing steam reforming of hydrocarbons has the following problem. Even if a hydrogen source such as, e.g., a hydrogen bomb is available, the process is complicated because it comprises "desulfurization treatment at a high temperature and high pressure → gas/liquid separation at a low temperature → another feeding of liquid hydrocarbons with a feeder". Because of this, the apparatus as a whole should be larger and have an increased cost. Simplification of the apparatus constitution cannot hence be attained.

### Disclosure of the Invention

An object of the present invention is to provide a method for the steam reforming of hydrocarbons which eliminates the problems of the above-described existing steam reforming of hydrocarbons including the hydrodesulfurization method, does not necessitate hydrogen feeding, is capable of safe desulfurization at low cost even in places not equipped with hydrogen lines, has a simple process flow and simplified apparatus constitution, is effective in inhibiting the size and cost of the whole apparatus from increasing, and is suitable for the production of high-quality hydrogen.

The present inventors made intensive investigations in order to accomplish the object. As a result, they have found that when a desulfurization step is conducted using a desulfurizing material in combination with the steam reforming of hydrocarbons with a specific catalyst, then desulfurization can be satisfactorily performed without the necessity of supplying hydrogen, and that when the treated hydrocarbons resulting from this desulfurization step are subjected as they are to a steam reforming step, then high-quality hydrogen can be produced from the hydrocarbons through a simple process flow. It was found that the object described above can be thus accomplished, and the invention has been completed.

Namely, the invention has the following constitutions.
(1) A method for desulfurization of hydrocarbon comprising reducing the sulfur content of hydrocarbons containing sulfur compounds, which comprises:
   mixing the hydrocarbons containing sulfur compounds with water vapor and
   contacting the resultant mixture with a catalyst comprising an inorganic oxide support and either platinum or palladium fixed to the support and with a desulfurizing material at a temperature of 300°C or higher.
(2) A method for desulfurization and reforming of hydrocarbon comprising reducing the sulfur content of hydrocarbons containing sulfur compounds, which comprises:
   obtaining desulfurized hydrocarbons by the method according to the above (1) and
   contacting the desulfurized hydrocarbons with a catalyst comprising an inorganic oxide support and a Group VIII metal of the periodic table fixed to the support.
(3) A method for production of hydrogen, comprising:
   obtaining desulfurized hydrocarbons by the method according to the above (1),
   contacting the desulfurized hydrocarbons with a catalyst comprising an inorganic oxide support and a Group VIII metal of the periodic table fixed to the support to thereby obtain hydrogen, and
   collecting the hydrogen obtained.
(4) The method according to any one of the above (1) to (3), wherein the hydrocarbons containing sulfur compounds have a boiling point range of from 30°C to 300°C.
(5) The method according to any one of the above (1) to (4), wherein the hydrocarbons containing sulfur compounds have a sulfur content of 3,000 ppm by weight or lower.

### Brief Description of the Drawings

Fig. 1 is a view diagrammatically illustrating the process flow of one embodiment of the method for desulfurization and reforming of hydrocarbon according to the present invention.
Fig. 2 is a view diagrammatically illustrating the process flow of one example of the existing steam reforming of hydrocarbons which includes a hydrodesulfurization method as a desulfurization treatment.

### Best Mode for Carrying Out the Invention

In the desulfurization step in the present invention, hydrocarbons (also referred to as a hydrocarbon feedstock) are mixed with water vapor, and this mixture is brought into contact with the given catalyst to cause a slight steam reforming reaction. With the hydrogen thus yielded, the sulfur compounds contained in the hydrocarbon feedstock are converted to hydrogen sulfide. The sulfur converted to hydrogen sulfide is adsorbed onto and trapped with a desulfurizing material, whereby the desulfurization of the hydrocarbon feedstock is completed. Thereafter, the treated feedstock which has been completely desulfurized in the desulfurization step by the steam desulfurization treatment described above is subjected as it is to a steam reforming step together with the water vapor mixed therewith. In the steam reforming step, the steam reforming of the hydrocarbon feedstock is completed to yield hydrogen as a target reaction product.

The invention necessitates none of the preparation of hydrogen for desulfurization, the gas/liquid separation of a desulfurization product mixture, a feeder for feeding the liquid hydrocarbons resulting from gas/liquid separation to a steam reformer, and the like such as those necessary in the existing method for the steam reforming of hydrocarbons shown in Fig. 2. As a result, the method of the present invention has a simpler process flow than the existing method for the steam reforming of hydrocarbons.

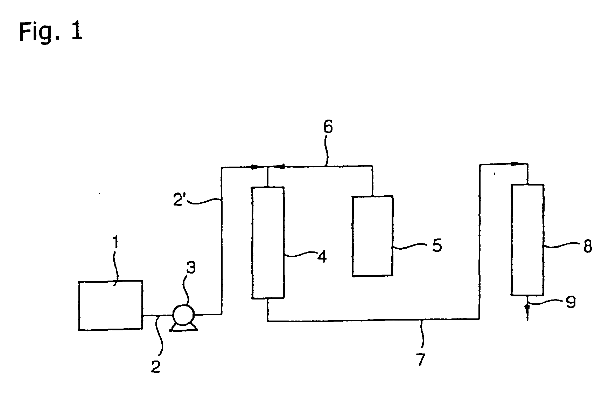

Modes for carrying out the present invention will be explained below by reference to Fig. 1, which diagrammatically illustrates the process flow of one embodiment of the method for desulfurization and reforming of hydrocarbon according to the invention.

In the embodiment shown in Fig. 1, kerosene as a hydrocarbon feedstock is fed from a kerosene tank 1 to a steam desulfurizer 4 through a line 2, pump 3, and line 2'. Water vapor is further supplied to the steam desulfurizer 4 from a steam generator 5 through a line 6. In the steam desulfurizer 4, the kerosene is mixed with the water vapor and brought into contact with a catalyst comprising an inorganic oxide support and either platinum or palladium fixed to the support and with a desulfurizing material at a high temperature of 300°C or above and a high pressure. The kerosene is thus desulfurized. This treated kerosene is withdrawn from the steam desulfurizer 4 through a line 7 and is fed as it is to a steam reformer 8.

In the steam reformer 8, the treated kerosene withdrawn from the steam desulfurizer 4 is completely steam-reformed at a high temperature and a high pressure with the water vapor accompanying the treated kerosene to thereby yield hydrogen as a target reaction product. The treated kerosene containing the hydrogen generated is withdrawn from the steam reformer 8 through a line 9, and the hydrogen is separated (not shown) from the treated kerosene.

The hydrocarbon feedstock to be used in the present invention is not particularly limited. However, various petroleum products having a boiling point range of from 30 to 300°C, such as naphtha, gasoline, kerosene, jet fuel, and the like, can be advantageously used. According to need, a mixture of two or more of these petroleum products may be used.

Hydrocarbons having boiling points lower than 30°C are regarded as gaseous feedstocks (e.g., city gas, LPG, and butane for industrial use). Since the sulfur compounds contained in such fractions can be easily removed by adsorption with a desulfurizing material, there is not much point in applying the desulfurization step according to the invention to these hydrocarbons. On the other hand, hydrocarbons having boiling points higher than 300°C (e.g., gas oil, fuel oil A, fuel oil C, and the like) have exceedingly poor reactivity in steam reforming and are hence less apt to undergo a steam reforming reaction which yields hydrogen necessary for steam desulfurization reaction. Namely, such hydrocarbons are unsusceptible to desulfurization.

Those hydrocarbon feedstocks are preferably ones having a sulfur content of 3,000 ppm by weight or lower. In case where a hydrocarbon feedstock having a sulfur content exceeding 3,000 ppm by weight is used, most of the active sites on the catalyst are occupied by sulfur and, as a result, the amount of active sites for steam reforming becomes insufficient, making it impossible to sufficiently produce hydrogen necessary for steam desulfurization reaction.

In the steam desulfurizer 4 in the desulfurization step in the invention, a hydrocarbon feedstock such as, e.g., kerosene is mixed with the water vapor sent from the steam generator 5 and then brought into contact with a catalyst comprising an inorganic oxide support and either platinum or palladium fixed to the support (hereinafter, this catalyst is referred to as "Pt/Pd supported catalyst"). Thus, a steam desulfurization reaction is conducted.

Namely, in the desulfurization step in the invention, a partial steam reforming reaction is caused to occur by that contact and the hydrogen thus yielded is used to conduct a desulfurization reaction to thereby convert the sulfur compounds contained in the hydrocarbon feedstock into hydrogen sulfide. In the case where sulfur compounds contained in a hydrocarbon feedstock have been incorporated into hydrocarbons having a complicated structure, e.g., benzothiophene compounds or dibenzothiophene compounds, these sulfur compounds do not react with desulfurizing materials and are difficult to remove. However, once such sulfur compounds are converted to hydrogen sulfide, it readily reacts with desulfurizing materials to form sulfur compounds with the desulfurizing materials while releasing hydrogen. Those sulfur compounds can hence be easily removed.

In the desulfurization step in the present invention, the proportion of the hydrogen feedstock to the water vapor to be mixed therewith is generally preferably in the range of from 0.5 to 10, more preferably in the range of from 1 to 6, in terms of the ratio of the number of water vapor molecules to the number of carbon atoms (hereinafter referred to also as water vapor/carbon ratio). For the purpose of inhibiting carbon deposition on the Pt/Pd supported catalyst, it is desirable to supply water vapor in a large amount. However, too large water vapor amounts reduce the time period of contact with the catalyst, resulting in the necessity of a larger catalyst amount.

The Pt/Pd supported catalyst to be used in the above-described desulfurization step in the invention has high resistance to sulfur, and the catalyst metal bonds to sulfur compounds reversibly. Because of this, the hydrogen sulfide generated by the desulfurization reaction can be continuously released and the decrease in activity which is caused by sulfur during long-term operation is little. In this Pt/Pd supported catalyst, although platinum or palladium can be used alone as the only metal, it is preferred to use platinum and palladium in combination. When platinum and palladium are used in combination, this combination functions to improve the steam-reforming performance and, hence, the reaction temperature required for the desulfurization reaction can be lowered. As a result, carbon deposition and catalyst metal sintering, which occur at high temperatures, can be inhibited and the catalyst life can be prolonged.

In the case where platinum and palladium are used in combination, the proportion thereof (Pt/Pd) is preferably from 1/1 to 1/3 by weight.

A third ingredient can be added to this Pt/Pd supported catalyst according to need in order to improve the catalyst performance. Examples of this third ingredient include metals such as rhenium, iridium, and ruthenium, Group IA or Group IIA metals of the periodic table, such as sodium, potassium, calcium, and magnesium, rare earth elements such as lanthanum and cerium, and the like.

As the inorganic oxide support of this Pt/Pd supported catalyst can be used a support suitably selected from various inorganic oxides in general use as catalyst supports. It is, however, preferred to use one comprising an alumina. Inorganic oxide supports comprising an alumina are preferred because they are effective in reducing the amount of a catalyst metal to be supported and the amount of a catalyst to be packed since they not only have a large specific surface area but also have the moderate acid-base performances characteristic of amphoteric oxides. This alumina preferably is γ-alumina, which has a large surface area as compared with other aluminas.

The inorganic oxide support comprising an alumina can be used in combination with one or more other inorganic oxides according to need. Examples thereof include silica-alumina, alumina-zirconia, alumina-zinc oxide, alumina-titania, alumina-magnesia, alumina-bismuth oxide, and the like.

Methods for the preparation of the Pt/Pd supported catalyst to be used in the desulfurization step in the invention are not particularly limited. A known method generally used for fixing a catalyst metal to an inorganic oxide support can be suitably used for the preparation. For example, the impregnation method, kneading method, coprecipitation method, sol-gel method, equilibrium adsorption method, and the like can be used.

The amount of the one or more catalyst metals including platinum and/or palladium to be fixed in preparing the Pt/Pd supported catalyst can be suitably selected according to need. However, the amount thereof is generally in the range of from 0.5 to 5% by weight, preferably from 0.5 to 3% by weight, based on the weight of the whole catalyst. In case where the amount of the catalyst metals fixed is less than 0.5% by weight, the catalyst as a steam desulfurization catalyst does not produce a sufficient effect. In case where the amount thereof exceeds 5% by weight, the growth (sintering) of catalyst particles occurs and, hence, the improvement in activity is not significant for the large amount of the catalyst metals fixed. In addition, such large catalyst metal amounts are economically disadvantageous.

In the desulfurization step in the invention, the steam desulfurization reaction which occurs when the hydrocarbon feedstock mixed with water vapor is contacted with the Pt/Pd supported catalyst should be conducted at a reaction temperature of 300°C or higher. In case where a reaction temperature lower than 300°C is used, the steam desulfurization reaction does not proceed at a desired rate. Although higher reaction temperatures are preferred from the standpoint of causing the steam desulfurization reaction to proceed, use of a higher temperature is expected to result in a decrease in operation efficiency or the like due to carbon deposition on the catalyst and an increase in heating amount necessary for the elevated temperature. It is therefore preferred to suitably select a reaction temperature in the range of from 300 to 700°C, more preferably in the range of from 350 to 700°C. It is further preferred that the Pt/Pd supported catalyst be hydrogenated and reduced before being subjected to the hydrodesulfurization reaction.

From the standpoint of the heat resistance of the material of the reaction tube, the upper limit of the reaction temperature is 1,000°C.

In the desulfurization step in the preset invention, the hydrocarbon feedstock which has been mixed with water vapor is brought into contact with the Pt/Pd supported catalyst and with a desulfurizing material. By the contact with a desulfurizing material, the sulfur which has been converted to hydrogen sulfide is adsorbed onto and trapped with the desulfurizing material and removed.

The sequence of contact with the Pt/Pd supported catalyst and with the desulfurizing material in the desulfurization step in the invention may be any of the following.
(a) The Pt/Pd supported catalyst is disposed in a preceding stage of the desulfurization step and the desulfurizing material is disposed in the subsequent stage. The feedstock mixture is contacted first with the Pt/Pd supported catalyst and then with the desulfurizing material.
(b) The Pt/Pd supported catalyst and the desulfurizing material are alternately disposed in the manner "ABABAB", and the feedstock mixture is contacted with these alternately.
(c) The Pt/Pd supported catalyst is mechanically mixed with the desulfurizing material, and the feedstock mixture is contacted simultaneously with the catalyst and the desulfurizing material which are in the mechanically mixed state.
(d) The desulfurizing material also is fixed to the Pt/Pd supported catalyst, and the feedstock mixture is contacted simultaneously with the Pt/Pd and the desulfurizing material which are in the form of a catalyst including both the Pt/Pd and desulfurizing material fixed thereto.

As this desulfurizing material can be used a suitably selected known desulfurizing material capable of adsorbing and trapping hydrogen sulfide. Preferred among desulfurizing materials are desulfurizing materials containing zinc. Zinc has the property of stoichiometrically retaining sulfur in the form of hydrogen sulfide in an amount close to 30% by weight through the reaction shown by the following scheme (I), and can advantageously remove the sulfur so as to prevent any sulfur compound from slipping into a later step.

ZnO + H₂S = ZnS + H₂O (I)

A combination of zinc with a general desulfurizing material such as, e.g., nickel, copper, or iron can also be advantageously used.

The removal of the sulfur in the form of hydrogen sulfide by contact with the desulfurizing material is generally preferably conducted at a reaction temperature of from 250 to 500°C. At temperatures lower than 250°C, not only the reaction between the desulfurizing material and the hydrogen sulfide does not proceed, but also reheating for the succeeding steam reforming reaction step necessitates an increased quantity of heat, resulting in a decrease in the efficiency of system operation. When the sequence of contact with the Pt/Pd supported catalyst and with the desulfurizing material in the desulfurization step is such that the feedstock mixture is contacted simultaneously with the Pt/Pd supported catalyst and the desulfurizing material as in the cases (c) and (d), it is necessary to use a reaction temperature of 300°C or higher in view of the reaction temperature necessary for the steam desulfurization reaction which occurs upon contact with the Pt/Pd supported catalyst. Like the Pt/Pd supported catalyst, the desulfurizing material is preferably hydrogenated and reduced before being subjected to the reaction.

In the desulfurization step in the invention, the reaction pressure is not particularly limited throughout the steam desulfurization reaction occurring upon contact with the Pt/Pd supported catalyst and the reaction for removing the sulfur in the form of hydrogen sulfide which occurs upon contact with the desulfurizing material. In general, however, the reaction pressure is preferably from ordinary pressure to 10 kg/cm² (1 MPa).

In the present invention, the treated feedstock which has undergone the desulfurization step in the manner described above and which contains both the excess unreacted water vapor and the hydrogen generated is continuously sent as it is, without undergoing a purification step, to the steam reformer 8 for the succeeding steam reforming step. There is no need of additionally supplying water vapor in this steam reforming step as the succeeding step. The excess unreacted water vapor contained in the treated feedstock obtained in the preceding desulfurization step suffices for the water vapor necessary for this steam reforming step. In this steam reforming step as the succeeding step, treatment can be conducted in the same manner as in a known method for the steam reforming of hydrocarbons, except that the treated feedstock obtained in the preceding desulfurization step is used as the raw material (feedstock) to be treated in this step.

For this steam reforming step can be used a catalyst suitably selected from conventionally known steam reforming reaction catalysts comprising an inorganic oxide support and a Group VIII metal of the periodic table fixed thereto. Preferred of these catalysts are catalysts comprising an inorganic oxide support and nickel, ruthenium, rhodium, iridium, or the like fixed thereto.

As the inorganic oxide support of the steam reforming catalyst can be used the same inorganic oxide support as that of the desulfurization catalyst. The amount of the Group VIII metal of the periodic table to be fixed to the inorganic oxide support is generally preferably from 0.5 to 5% by weight based on the weight of the whole catalyst. In this steam reforming step, the reaction temperature in the steam reforming reaction is generally preferably from 600 to 900°C and the reaction pressure is generally preferably from ordinary pressure to 50 kg/cm² (5 MPa).

In the present invention, the steam reforming reaction of the hydrocarbon feedstock is completed in this steam reforming step to yield hydrogen as a target reaction product. The treated feedstock obtained in this steam reforming step is withdrawn from the steam reformer 8 through the line 9. The hydrogen contained in this treated feedstock can be made to have a higher purity by a hydrogen purification method such as, e.g., the water gas shift reaction, selective oxidation reaction, pressure-swing adsorption (PSA), adsorptive separation, membrane separation, or gas/liquid separation, whereby the hydrogen can be advantageously used in various applications including, e.g., fuel cells.

### Examples

The present invention will be explained below in greater detail by reference to Examples and Comparative Examples, but the invention should not be construed as being limited to the following Examples.

In Examples 1 to 11, among the following Examples, only the desulfurization step according to the invention was conducted in order to demonstrate the desulfurization effect of the desulfurization step. In Examples 12 to 14, all the steps according to the invention were conducted in order to demonstrate the effects produced by all steps.

The following Comparative Examples 1 to 5 relate only to desulfurization steps so as to demonstrate the significance of the essential requirements for the desulfurization step which are specified in the present invention.

### EXAMPLE 1 (Desulfurization step only was conducted)

A liquid to be infiltrated into 1,000 mL of spherical alumina having a diameter of from 2 to 4 mm (specific surface area, 300 m²/g; pore volume, 0.65 mL/g) waspreparedbydissolving 8.7 g of chloroplatinic acid pentahydrate and 11.1 g of palladium chloride in 310 g of water and 110 g of 10% by weight hydrochloric acid. The infiltration liquid was infiltrated into the alumina support in a flask at room temperature. After the flask was rotated for 1 hour, the support was air-dried to remove the water. Thereafter, the support was burned in air at 600°C for 3 hours to obtain a steam desulfurization catalyst. The amounts of the supported catalyst metals in the burned catalyst were 0.5% by weight for platinum and 1.0% by weight for palladium based on the weight of the whole catalyst.

About 300 mL of this catalyst was packed into an upper part of a fixed-bed flow-through type reactor, while about 300 mL of zinc oxide formed into pellets was packed into a lower part thereof. Reduction as a pretreatment was conducted at 500°C in a hydrogen stream. While the temperature of the reaction tube was kept at 500°C, the hydrogen introduction was stopped, and water vapor was supplied and water was ascertained to fall in drops from the reaction tube outlet. Thereafter, a commercial product of kerosene (properties are shown in Table 2) was fed to the reaction tube at a rate of 37.5 mL per hour (LHSV=0.125).

In this operation, the amount of water vapor was regulated so that the water vapor/carbon ratio was 3.5. The products of the reaction were subjected to gas/liquid separation, and the liquid fraction was further separated into water and unreacted hydrocarbons with a separatory funnel. The content of sulfur compounds in the unreacted hydrocarbons was measured with a sulfur analyzer operating by the oxidative decomposition/ultraviolet fluorescent method. Furthermore, about 100 mL of the gases yielded by the reaction were charged into a gas-collecting pack, and then injected with a 0.5-µL syringe into the sulfur analyzer operating by the oxidative decomposition/ultraviolet fluorescent method, in order to measure the content of sulfur in the gases. Prior to the measurement, three standard samples (hydrogen sulfide/hydrogen gas) having sulfur contents of 0.1, 1.0, and 10 ppm by weight were used to draw a calibration curve. This calibration curve was used for determining the sulfur content of the gases yielded by the reaction.

The reactor was operated for 5 hours. Thereafter, the feeding of the feedstock kerosene was stopped. At 30 minutes thereafter, the feeding of water vapor was stopped and the heater for heating the reaction tube was switched off. The reactor was allowed to cool to room temperature in a nitrogen stream. Thus, operation on the first day was finished.

On the second and succeeding days, the same operation as on the first day was conducted, except that the pretreatment reduction was omitted. The results of the sulfur content measurements are shown in Table 1.

### EXAMPLE 2 (Desulfurization step only was conducted)

The same operation as in Example 1 was conducted, except that the reaction temperature was changed to 450°C. The results of sulfur content measurements are shown in Table 1.

### EXAMPLE 3 (Desulfurization step only was conducted)

The same operation as in Example 1 was conducted, except that the reaction temperature was changed to 400°C. The results of sulfur content measurements are shown in Table 1.

### EXAMPLE 4 (Desulfurization step only was conducted)

The same operation as in Example 3 was conducted, except that the water vapor/carbon ratio was changed to 4.0. The results of sulfur content measurements are shown in Table 1.

### EXAMPLE 5 (Desulfurization step only was conducted)

The same operation as in Example 3 was conducted, except that the water vapor/carbon ratio was changed to 5.0. The results of sulfur content measurements are shown in Table 1.

### EXAMPLE 6 (Desulfurization step only was conducted)

The same operation as in Example 4 was conducted, except that 300 mL of a Cu/ZnO desulfurizing material was packed into the part after the steam desulfurization catalyst and the removal of hydrogen sulfide was conducted at 350°C. The results of sulfur content measurements are shown in Table 1.

### EXAMPLE 7 (Desulfurization step only was conducted)

The same operation as in Example 6 was conducted, except that the amounts of the supported metals in the steam desulfurization catalyst were changed to 1.0% by weight for platinum and 2.0% by weight for palladium. The results of sulfur content measurements are shown in Table 1.

### EXAMPLE 8 (Desulfurization step only was conducted)

The same operation as in Example 4 was conducted, except that the hydrocarbons to be used as a feedstock were changed to naphtha (properties are shown in Table 3) and the feed rate was changed to 75 mL (LHSV=0.25) . The results of sulfur content measurements are shown in Table 1.

### EXAMPLE 9 (Desulfurization step only was conducted)

The same operation as in Example 8 was conducted, except that the feedstock feed rate was changed to 225 mL (LHSV=0.75) . The results of sulfur content measurements are shown in Table 1.

### EXAMPLE 10 (Desulfurization step only was conducted)

The same operation as in Example 3 was conducted, except that the water vapor/carbon ratio was changed to 1.5. The results of sulfur content measurements are shown in Table 1.

### EXAMPLE 11 (Desulfurization step only was conducted)

The same operation as in Example 3 was conducted, except that the water vapor/carbon ratio was changed to 7.0. The results of sulfur content measurements are shown in Table 1.

### EXAMPLE 12 (All steps were conducted)

A desulfurization step was conducted in the same manner as in Example 1. Immediately thereafter, the desulfurization products were continuously fed to a fixed-bed flow-through type reactor installed which contained about 150 mL of a commercial ruthenium catalyst (supported-ruthenium amount, 2% by weight; specific surface area, 150 m²/g) packed therein. A steam reforming reaction was conducted at a reaction temperature of 800°C and at ordinary pressure to obtain reaction products of the steam reforming step.

The reaction products were examined for the amount of residual liquid hydrocarbons. The reaction products were further analyzed by FID gas chromatography to determine the amount of C2 and higher gaseous hydrocarbons and analyzed by TCG gas chromatography for hydrogen, CO, CO₂, and CH₄. The composition of the reaction products of this steam reforming step is shown in Table 4.

### Example 13 (All steps were conducted)

Reaction products of a steam reforming step were obtained by conducting the same operation as in Example 12, except that 150 mL of a commercial nickel catalyst (supported-nickel amount, 10% by weight; supported-K₂O amount, 1% by weight; specific surface area, 50 m²/g) was used. The composition of the reaction products of this steam reforming step is shown in Table 4.

### EXAMPLE 14 (All steps were conducted)

Reaction products of a steam reforming step were obtained by conducting the same operation as in Example 12, except that the reaction products of a desulfurization step were obtained in the same manner as in Example 3. The composition of the reaction products of this steam reforming step is shown in Table 4.

### COMPARATIVE EXAMPLE 1 (Comparative Example relating to desulfurization step)

The same operation as in Example 4 was conducted, except that a commercial Co-Mo/Al₂O₃ catalyst (supported-cobalt amount, 5% by weight; supported-molybdenum amount, 20% by weight; specific surface area, 250 m²/g) was packed as a steam desulfurization catalyst. The results of sulfur content measurements are shown in Table 1.

### COMPARATIVE EXAMPLE 2 (Comparative Example relating to desulfurization step)

The same operation as in Example 4 was conducted, except that a commercial Ru/Al₂O₃ catalyst (supported-ruthenium amount, 3% by weight; specific surface area, 150 m²/g) was packed as asteam desulfurization catalyst. The results of sulfur content measurements are shown in Table 1.

### COMPARATIVE EXAMPLE 3 (Comparative Example relating to desulfurization step)

The same operation as in Example 4 was conducted, except that a commercial Ni/Al₂O₃ catalyst (supported-nickel amount, 30% by weight; specific surface area, 100 m²/g) was packed as a steam desulfurization catalyst. The results of sulfur content measurements are shown in Table 1.

### COMPARATIVE EXAMPLE 4 (Comparative Example relating to desulfurization step)

The same operation as in Example 4 was conducted, except that the reaction temperature was changed to 250°C. The results of sulfur content measurements are shown in Table 1.

### COMPARATIVE EXAMPLE 5 (Comparative Example relating to desulfurization step)

The same operation as in Example 4 was conducted, except that the packing of zinc oxide into the fixed-bed flow-through type reactor was omitted. The results of sulfur content measurements are shown in Table 1.

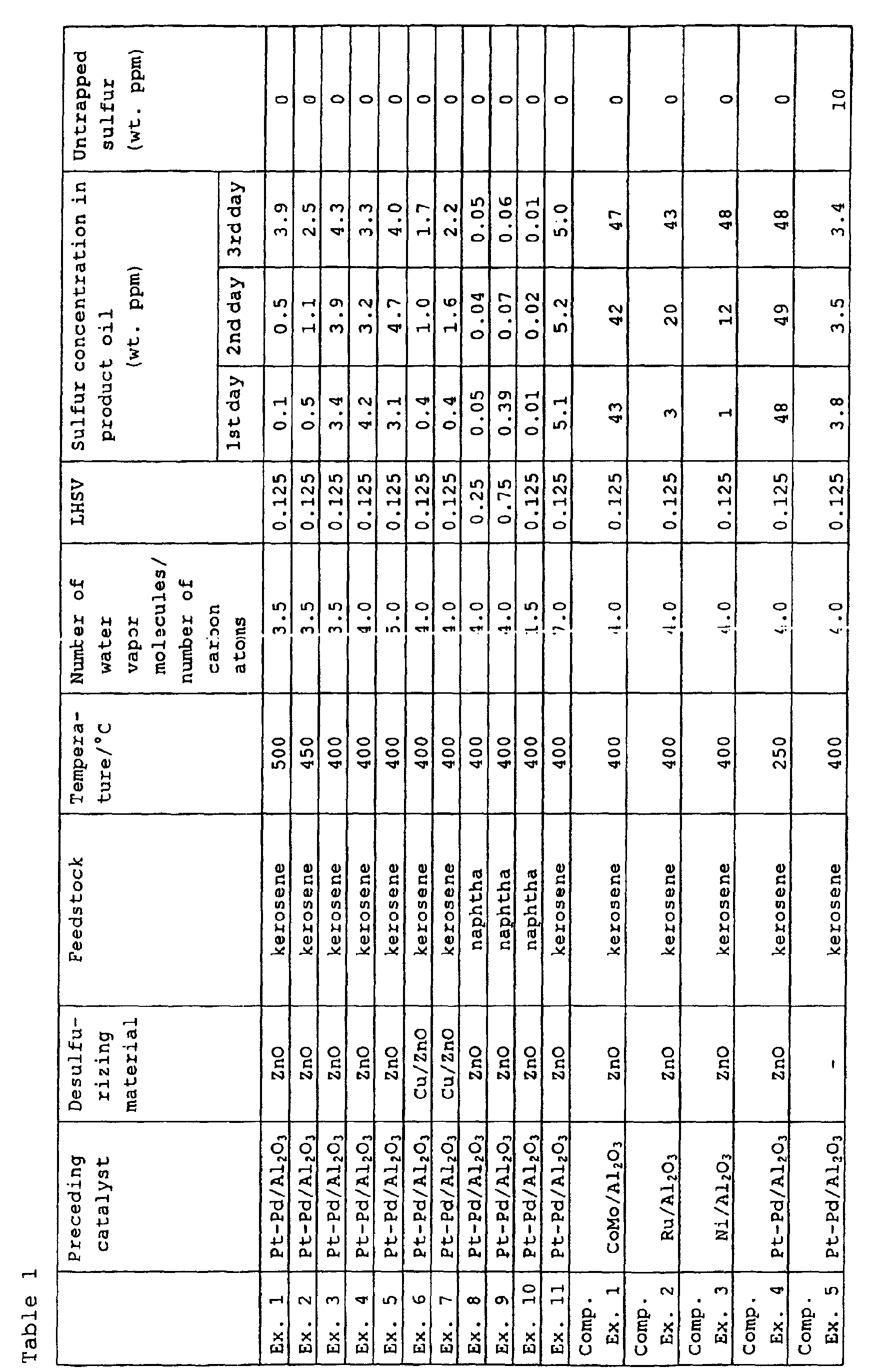

**Table 2**

| | | |
|---|---|---|
| Density | @15°C g/cm³ | 0.7927 |
| Dynamic viscosity | @30°C mm²/s | 1.475 |
| Distillation °C | IBP | 152 |
| | 5 vol% | 164 |
| | 10 vol% | 170 |
| | 20 vol% | 177 |
| | 30 vol% | 185 |
| | 40 vol% | 192 |
| | 50 vol% | 200 |
| | 60 vol% | 210 |
| | 70 vol% | 221 |
| | 80 vol% | 234 |
| | 90 vol% | 248 |
| | 95 vol% | 258 |
| | FBP | 275 |
| Cloud point | °C | -44 |
| Pour point | °C | -45 |
| Saybolt color | | >+30 |
| ASTM color | | L0.5 |
| Flash point | °C | 44.5 |
| Sulfur content | wt. ppm | 52 |
| Hydrogen content | wt.% | 13.85 |

**Table 3**

| | | |
|---|---|---|
| Density | @15°C g/cm³ | 0.6591 |
| Dynamic viscosity | @30°C mm²/s | 0.4137 |
| Distillation °C | IBP | 35 |
| | 5 vol% | 42 |
| | 10 vol% | 44 |
| | 20 vol% | 46 |
| | 30 vol% | 48 |
| | 40 vol% | 51 |
| | 50 vol% | 53 |
| | 60 vol% | 56 |
| | 70 vol% | 59 |
| | 80 vol% | 63 |
| | 90 vol% | 67 |
| | 95 vol% | 71 |
| | FBP | 86 |
| Saybolt color | | >+30 |
| ASTM color | | L0.5 |
| Flash point | °C | -35 |
| Sulfur content | wt. ppm | 6 |
| Hydrogen content | wt.% | 16.12 |

**Table 4**

| | Amount of residual liquid (vol%) | C2 and higher hydrocarbons (vol%) | Results of gas analysis (vol%) | | | |
|---|---|---|---|---|---|---|
| | | | Hydrogen | CO | CO₂ | CH₄ |
| Example 12 | | | | | | |
| 1st-day | 0 | 0 | 70 | 16 | 13 | 1 |
| 2nd-day | 0 | 0 | 70 | 17 | 12.5 | 0.5 |
| 3rd-day | 0 | 0 | 71 | 16 | 12 | 1 |

| Example 13 | | | | | | |
|---|---|---|---|---|---|---|
| 1st-day | 0 | 0 | 72 | 15 | 12 | 1 |
| 2nd-day | 0 | 0 | 71 | 16 | 13 | 1 |
| 3rd-day | 0 | 0 | 71 | 15 | 13 | 1 |

| Example 14 | | | | | | |
|---|---|---|---|---|---|---|
| 1st-day | 0 | 0 | 70 | 16 | 13 | 1 |
| 2nd-day | 0 | 0 | 71 | 15 | 13 | 1 |
| 3rd-day | 0 | 0 | 70 | 16 | 13 | 1 |

Table 1 shows that by the desulfurization step according to the present invention, liquid fuels such as kerosene and naphtha can be deeply desulfurized stably over a prolonged time period while preventing sulfur compounds from slipping into the downstream side. Furthermore, Table 4 shows the following. By the desulfurization step and steam reforming step according to the invention, gases having a high hydrogen concentration canbe obtained through reforming which contain neither a residual liquid remaining unreacted or undecomposed nor any hydrocarbon having 2 or more carbon atoms. The steps are hence suitable for the production of high-purity hydrogen.

### Industrial Applicability

According to the invention, a method of the desulfurization/reforming of hydrocarbons is provided which eliminates the problems of the existing steam reforming of hydrocarbons including a hydrodesulfurization method, does not necessitate hydrogen feeding, is capable of safe desulfurization at low cost even in places not equipped with hydrogen lines, has a simple process flow and simplified apparatus constitution, is effective in inhibiting the size and cost of the whole apparatus from increasing, and is suitable for the production of high-quality hydrogen.

The method of desulfurization/reforming of hydrocarbons according to the invention can be advantageously used as, e.g., a process for producing hydrogen for use in fuel cells.

## Claims

1. A method for desulfurization of hydrocarbon comprising reducing the sulfur content of hydrocarbons containing sulfur compounds, which comprises:
mixing the hydrocarbons containing sulfur compounds with water vapor and
contacting the resultant mixture with a catalyst comprising an inorganic oxide support and either platinum or palladium fixed to the support and with a desulfurizing material at a temperature of 300°C or higher.

2. Amethod for desulfurization and reforming of hydrocarbon comprising reducing the sulfur content of hydrocarbons containing sulfur compounds, which comprises:
obtaining desulfurized hydrocarbons by the method according to claim 1 and
contacting the desulfurized hydrocarbons with a catalyst comprising an inorganic oxide support and a Group VIII metal of the periodic table fixed to the support.

3. A method for production of hydrogen, comprising:
obtaining desulfurized hydrocarbons by the method according to claim 1,
contacting the desulfurized hydrocarbons with a catalyst comprising an inorganic oxide support and a Group VIII metal of the periodic table fixed to the support to thereby obtain hydrogen, and
collecting the hydrogen obtained.

4. The method according to any one of claims 1 to 3, wherein the hydrocarbons containing sulfur compounds have a boiling point range of from 30°C to 300°C.

5. The method according to any one of claims 1 to 4, wherein the hydrocarbons containing sulfur compounds have a sulfur content of 3,000 ppm by weight or lower.
